# EUROPÄISCHE PATENTSCHRIFT

(11) **EP 0 767 119 B1**
(45) Veröffentlichungstag und Bekanntmachung des Hinweises auf die Patenterteilung: **12.05.1999**
(21) Anmeldenummer: 95115858.3
(22) Anmeldetag: 09.10.1995
(51) Int. Cl.: B65G 53/00, B65G 53/46, B65G 53/32

(54) **Dichtplatte für die Dichtung einer Rotorstufe**
Disk seal for sealing a rotary valve
Joint à disque pour l'étanchéité d'une vanne rotative

(43) Veröffentlichungstag der Anmeldung: 09.04.1997
(73) Patentinhaber: Sika Equipment AG, 8967 Widen (CH)
(72) Erfinder: Egli, Ernst, CH-8951 Fahrweid (CH)
(74) Vertreter: Troesch Scheidegger Werner AG

(56) Entgegenhaltungen:
- DE-A- 2 415 975
- PATENT ABSTRACTS OF JAPAN vol. 10 no. 40 (M-454) [2097] ,18.Februar 1986 & JP-A-60 191920 (TOUKIYUU K.K.) 30.September 1985,

## Beschreibung

Die vorliegende Erfindung betrifft eine Dichtplatte für die Dichtung einer Rotorstufe an einer Spritzmaschine der im Oberbegriff von Anspruch 1 genannten Art.

Dichtplatten der genannten Art, welche zwischen Spritzmaschinen-Stator und Rotorstufen-Stirnflächen wirken und im wesentlichen auf der Basis elastischer Platten aufgebaut sind, sind bekannt. Insbesondere an der Druckluft-Anschlussöffnung der Ausspritzöffnung sowie an der Einfüllöffnung ist es dabei weiter bekannt, betrachtet in Umlaufrichtung des Rotors, in einem Peripheriebereich der Oeffnung an der Platte, gegen die Rotorbewegung gerichtete Abstreifelemente aus Metall vorzusehen. Dabei ist es äusserst nachteilig, dass die metallischen Abstreifelemente und die Dichtfläche der Dichtungsplatte unterschiedlich durch das Spritzmedium erodiert werden, was eine häufige und relativ aufwendige Nacharbeitung der Metall/Plattenmaterialfläche notwendig macht.

Aus der DE-OS-24 15 975 ist es bekannt, in eine Oeffnung der Dichtplatte ein ringförmiges Teil aus Metall, als Abstreichmesser, einzubauen. Die Aussenfläche des ringförmigen Teils ist rundum mittels einer Verzahnung im Material der elastischen Platte eingebettet. Die Dichtplatte umfasst ausserdem, einseitig auf der elastischen Platte, eine Metallplatte, welche am Ort der erwähnten Oeffnung eine Plattenöffnung aufweist, die so bemessen ist, dass der ringförmige Teil, nebst einer Partie der elastischen Platte, bündig mit der freien Fläche der Metallplatte durch die Plattenöffnung durchragt.

Nachteilig an dieser Dichtplatte ist es, dass der ringförmige Teil beim Fertigungsprozess der Dichtplatte als eigenständiger Teil positioniert und in das elastische Material eingegossen werden muss und dass die federnde Lagerung des Teils über die Verzahnung am elastischen Material realisiert ist, dessen Stärke im Bereich der Metallplatte gering ist.

Es ist Aufgabe der vorliegenden Erfindung, ausgehend von einer Dichtplatte letztgenannter Art, die erwähnten Nachteile zu beheben.

Dies wird bei Ausbildung der genannten Platte nach dem Wortlaut des kennzeichnenden Teils von Anspruch 1 erreicht.

Um gleichzeitig einen wesentlichen Abschnitt der jeweiligen Rotorstirnfläche abzudichten und damit die Dichtungswirkung zu erhöhen, wird weiter vorgeschlagen, die Dichtplatte kreisring-segmentförmig auszubilden, dabei vorzugsweise als Halbkreisring.

Insbesondere bei Einsatz einer erfindungsgemässen Dichtplatte im Bereich der Einfüllöffnung ist, gemäss Wortlaut von Anspruch 3, die in der Platte vorgesehene Oeffnung kreissektorartig ausgebildet, und das Abstreifelement wird im Bereich eines der Enden der erwähnten Oeffnung angeordnet.

Im weiteren wird die Platte, falls ihre Oeffnung als Druckluft-Anschlussöffnung wirkt, bevorzugterweise gemäss Wortlaut von Anspruch 4 ausgebildet.

Die Erfindung wird anschliessend beispielsweise anhand von Figuren erläutert.

Diese zeigen:
- Fig. 1: schematisch, den bekannten Aufbau einer Rotorspritzmaschine;
- Fig. 2: in Seitenansicht und vereinfacht, eine Spritzmaschine mit erfindungsgemässer Dichtplatte;
- Fig. 3: eine an der Maschine gemäss Fig. 2 erfindungsgemäss eingesetzte, Maschinen-Statorseitige, obere Dichtplattenanordnung in Aufsicht;
- Fig. 4: eine teilweise Schnittdarstellung gemäss Linie B-B von Fig. 3 zur Erläuterung des erfindungsgemäss vorgesehenen federnden Abstreifers an der Dichtungsplattenanordnung;
- Fig. 5: die Aufsicht auf die untere erfindungsgemässe Dichtungsplattenanordnung, statorseitig an der Spritzmaschine gemäss Fig. 2;
- Fig. 6: vereinfacht und in Aufsicht, die Spritzmaschine mit ausklappbarer hochdruckseitiger Dichtungsplattenanordnung und diesbezüglicher Spannanordnung;
- Fig. 7a bis 7c: die an der Maschine gemäss Fig. 6 vorgesehenen Spannkolbenanordnungen in dichtend gespannter (a), teilweise entspannter (b) und vollständig entspannter (c) Position;
- Fig. 8: schematisch und vereinfacht, das Hydraulikschema zur Betätigung der Spannkolbenanordnung gemäss Fig. 7.

### Prinzip der Rotorspritzmaschine

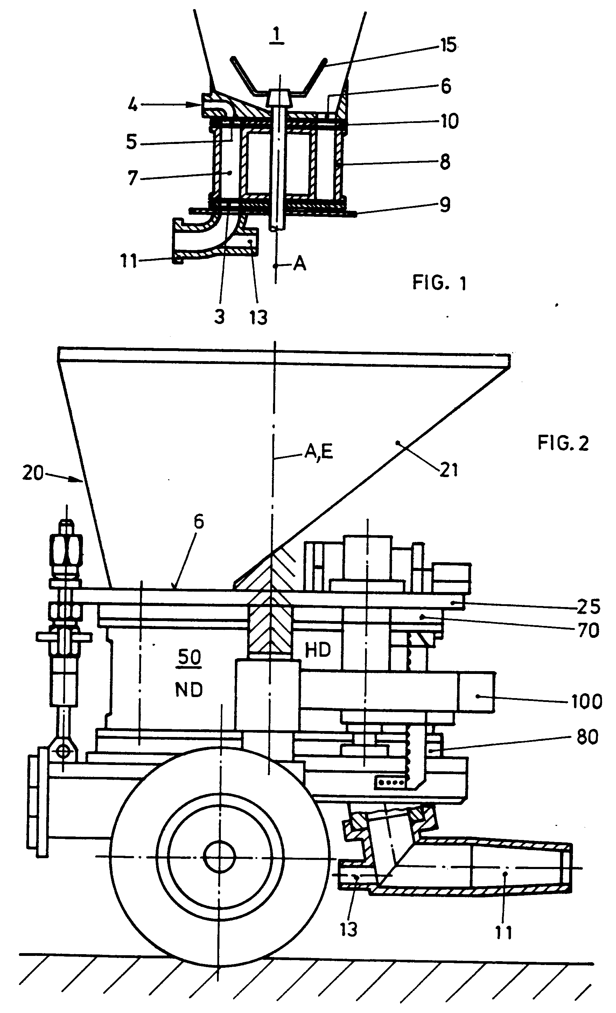

In Fig. 1 ist schematisch eine nach dem Rotorprinzip arbeitende Betonspritzmaschine dargestellt. In einen Trichter 1 wird Beton eingefüllt. Unterhalb des Trichters 1 läuft, getrieben um eine Achse A, ein Rotor 8 um, welcher, ähnlich einem Revolver, an seinem Umfang verteilt, mehrere Aufnahmebüchsen 7 für das Beton umfasst. Ortsfest am Trichter 1 ist eine Einfüllöffnung 6 so angeordnet, dass, sequentiell, die Aufnahmebüchsen 7 bei Drehen des Rotors mit der Oeffnung 6 in Ausrichtung gebracht werden.

Die jeweils mit der Einfüllöffnung 6 in Ausrichtung gebrachten Büchsen 7 am Rotor 8 sind unten durch eine stationäre Dichtplatte 9 verschlossen.

Trichterseitig ist, gerätefest, eine Druckluftleitung 4 vorgesehen, welche über eine Druckluftöffnung 5 mit jeweiligen, damit in Ausrichtung gebrachten Büchsen 7 in Wirkverbindung gebracht wird. In dieser Ausschiessposition, in Ausrichtung mit Druckluftöffnung 5, ist die jeweilige Büchse 7 ausgerichtet auf eine unten gelegene Ausschiessöffnung 3 in der Dichtplatte 9. Die Dichtplatte 9 verschliesst, einerseits, in Einfüllposition die jeweilige Büchse 7 nach unten und stellt, anderseits, für das Ausschiessen des in die jeweilige Büchse 7 eingefüllten Betons, Dichtheit an der Ausschiessöffnung 3 sicher.

Eine obere Dichtplatte 10 wirkt auf die Oberseite des Rotors 8. Die Ausschiessöffnung 3 geht über einen Krümmer 11 in die hier nicht dargestellte Förderleitung der Betonspritzmaschine über, in welchen Krümmer 11 eine Förderdruck-Luftleitung 13 einmündet.

Im Trichter 1 wirkt ein getriebenes Rührwerk 15.

Eine solche Betonspritzmaschine arbeitet nach dem sogenannten "Dünnstromprinzip", bei welchem das Spritzmedium, Beton, in der Druckluft, welche in Leitung 13 eingespiesen wird, praktisch schwimmend, durch die an den Bogen 11 angeschlossene Förderleitung gefördert wird. Entlang dieser Förderleitung werden zudem Wasser, gegebenenfalls weitere Zusatzmittel, dem Spritzmedium beidosiert.

### Maschine mit erfindungsgemässen Dichtplatten

In Fig. 2 ist, in Seitenansicht, eine Rotor-Betonspritzmaschine dargestellt, ohne die üblicherweise auf dem gleichen Wagen montierten Steuerungen und Antriebsaggregate. Anhand dieser Figur sollen die wesentlichen Funktionsgruppen an der Maschine vorgestellt werden, welche anschliessend z.T. detaillierter beschrieben werden sollen.

Die Maschine umfasst, wie üblich, eine Einfüllanordnung 20, mit einem Einfülltrichter 21 mit Rührwerk (nicht dargestellt) sowie Rüttler. Wie anhand von Fig. 1 erläutert wurde, mündet der Trichter 21 schliesslich in die Einfüllöffnung 6 für die Rotorbüchsen 7 aus. Die Einfüllanordnung 20 ist an einem Geräterahmen 25 montiert.

Die Maschine umfasst weiter eine Rotorstufe 50, eine obere stationäre Dichtungsanordnung 70 sowie eine untere stationäre Dichtungsanordnung 80. Die Rotorstufe 50 sowie die Dichtungsanordnungen 70 und 80 können, in Aufsicht, im wesentlichen durch eine diametrale Ebene E durch die Rotorachse A, senkrecht zur Ebene von Fig. 2, in eine Niederdruckseite ND und eine Hochdruckseite HD unterteilt werden. Niederdruckseitig wird, im wesentlichen unter Atmosphärendruck, Spritzmedium durch die Einfüllanordnung 20 in die Rotorstufe 50 gefüllt, während auf der Hochdruckseite, wie anhand von Fig. 1 erläutert wurde, das Spritzmedium mittels Druckluft aus Leitung 4 und Leitung 13 ausgeschossen wird. Die beiden Bereiche ND und HD sind in Fig. 2 schematisch durch die Schraffur beidseits der Ebene E durch die Rotorachse A angedeutet.

Hochdruckseitig HD ist weiter eine Spannanordnung 100 vorgesehen, mittels welcher, einerseits, die einfache Zugänglichkeit zur Rotorstufe 50 sowie den HD-seitigen Partien der Dichtungsanordnungen 70, 80 sichergestellt ist und mit welcher, anderseits, wie noch zu erläutern sein wird, die hochdruckseitigen Abdichtungen am Rotor sichergestellt werden.

Es sollen nun anschliessend die erfindungswesentlichen Baugruppen der erfindungsgemässen Maschine erläutert werden.

### Obere Dichtungsanordnung 70

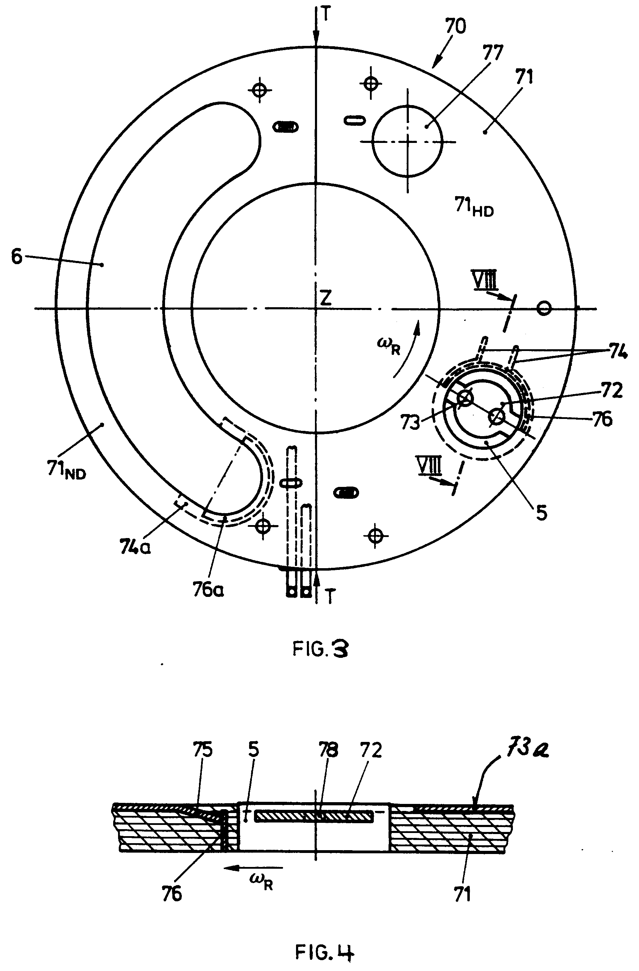

Der obere Uebergang zwischen Rotorstufe 50 und geräteseitigen Anschlüssen, nämlich der Einlassanordnung 20 und der Druckluftleitung 4 gemäss Fig. 1, erfolgt an der oberen Dichtungsanordnung 70, gemäss Fig. 3. Sie wird, geräterahmenseitig, durch eine im wesentlichen kreisringförmige, elastische Platte 71, vorzugsweise Gummiplatte, gebildet, mit einem Hochdrucksegment 71_{HD} und einem Niederdrucksegment 71_{ND}. Im Hochdrucksegment 71_{HD} ist die Druckluftöffnung 5 gemäss Fig. 1 vorgesehen.

An zwei sich radial bezüglich des Kreisringzentrums Z gegenüberliegenden Halterungen ist in der Druckluftöffnung 5, wie insbesondere in Fig. 4 ersichtlich, ein im wesentlichen kreisförmiger Mittensteg 72 mit Düsenöffnungen 78 aufgehängt.

Damit wird ein düsenartiger Uebergang geschaffen. Die Platte 71, aus hartem, vulkanisiertem Gummi gefertigt, weist an ihrer Oberseite eine Metalldeckplatte 73 auf, an der der Steg 72 angeformt ist.

Mit ω_{R} ist in Fig. 3 und in Fig. 4 die Rotorbewegung bezüglich der feststehenden Platte 71 eingetragen. Die Deckplatte 73 ist im Bereich der Druckluftöffnung 5, wie bei 74 dargestellt, eingeschnitten und bildet den insbesondere in Fig. 4 ersichtlichen, sich in die Platte hinein erstreckenden Federsteg 75. An diesem ist, endständig, ein halbkreissegmentförmig gebogenes Abstreifelement 76 angeschweisst. Das Abstreifelement 76 ist an der Unterseite der Platte 71, d.h. mit der mit der oberen Rotorfläche in Reibeingriff befindlichen Plattenfläche, bündig freiliegend und, mit dem Material der Platte 71 und dem Federsteg 75, federnd gelagert. Damit ist ein enges, selbstnachstellendes Anlegen des Abstreifelementes 76 an der oberen Rotorabschlussfläche sichergestellt.

Durch die Druckluftöffnung 5 wird, wie in Fig. 1 schematisch dargestellt, über Druckluftleitung 4 jeweils der Füllinhalt einer der Rotorbüchsen 7 ausgeschossen. Aufgrund des unter hohem Ueberdruck erfolgenden Ausschiessens bleibt, bei Weiterdrehen der Rotorstufe 50 in Richtung ω_{R}, die eben geleerte Rotorbüchse 7 auf Ueberdruck. Aus diesem Grund folgt der Druckluftöffnung 5 in der Platte 71 eine Druckentlastungsöffnung 77, welche mit der Maschinenumgebung kommuniziert und durch welche Druckausgleich erfolgt, bevor die betrachtete Rotorbüchse das Niederdrucksegment 71_{ND} der Platte 71 erreicht.

Im Niederdrucksegment 71_{ND} der Platte 71 ist, kreissegmentförmig, die Einfüllöffnung 6 gemäss Fig. 1 vorgesehen. An der Einfüllöffnung 6 werden mehrere, im spezifischen Beispiel ca. viereinhalb Büchsen 7 der Rotorstufe 50 gleichzeitig gefüllt. In Rotordrehrichtung ω_{R} ist am Ende der Oeffnung 6 wiederum ein Abstreifelement 76a vorgesehen, angebracht und in die Platte 71 eingelassen über nach unten gebogene Stege 74a an der Deckplatte 73 gemäss Fig. 4, in Analogie zum Element 76 an der Druckluftöffnung 5.

Insbesondere wesentliche Aspekte an der oberen, mit dem Rotor in Reibeingriff stehenden Platte 71 sind einerseits die im Gummiplattenmaterial federnden Abstreifer 76 und 76a, anderseits das Vorsehen der Druckentlastungsöffnung 77.

### Untere Dichtungsanordnung 80

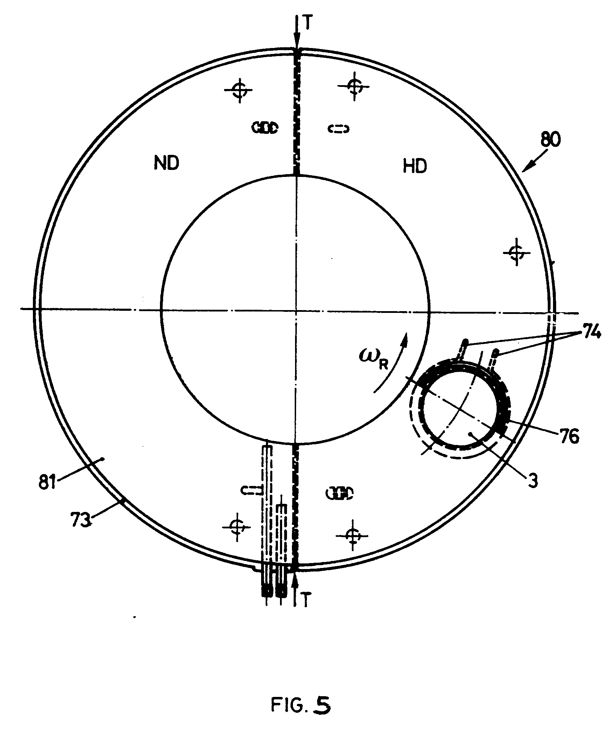

Gemäss Fig. 5 ist unterhalb der Rotorstufe 50 eine untere, kreisringförmige Dichtplatte 81, wiederum aus elastischem Material, vorzugsweise aus Gummi, vorgesehen, wobei auch die untere Dichtplatte 81 in ein Hochdrucksegment 81_{HD} und ein Niederdrucksegment 81_{ND} unterteilbar ist. Hochdruckseitig ist die Ausschiessöffnung 3 gemäss Fig. 1 vorgesehen, ausgerichtet auf die Druckluftöffnung 5 gemäss Fig. 3. An der Ausschiessöffnung 3 ist ein Abstreifelement 76 vorgesehen, angeordnet und aufgebaut wie das Abstreifelement 76 an der Druckluftöffnung 5.

Während Fig. 3 eine Aufsicht auf die obere Dichtplatte 71 darstellt, zeigt Fig. 5 die Aufsicht auf die untere und zeigt damit das Abstreifelement 76 an der Oeffnung 3 freiliegend. Der Plattenaufbau der Platte 81 mit einer Deckplatte 73 darunter, analog zu derjenigen gemäss Fig. 4, ist gleich wie der Aufbau der oberen Platte 71, abgesehen davon, dass an der unteren Platte 81 weder eine Entlastungsöffnung 77 noch, wie sich ohne weiteres aus Fig. 1 ergibt, eine Einfüllöffnung 6 vorgesehen ist.

Wie im weiteren ersichtlich, aus Quervergleich der Fig. 1, 3 und 5, bestehen auf der Hochdruckseite HD wesentlich höhere Dichtungsanforderungen zwischen den beiden Platten 71, 81 und der Rotorstufe 50. Es ist mithin möglich, mittels Dimensionierung der Dicke der jeweiligen Dichtplatten 71 und 81 an den Niederdrucksegmenten 71_{ND}, 81_{ND} etwas geringer als an den Hochdrucksegmenten 71_{HD}, 81_{HD}, das auf den Rotorantrieb rückwirkende Reibmoment wesentlich zu reduzieren. Dies erlaubt wiederum, die notwendige Antriebsleistung des vorgesehenen Motors zu reduzieren.

### Spannanordnung 100

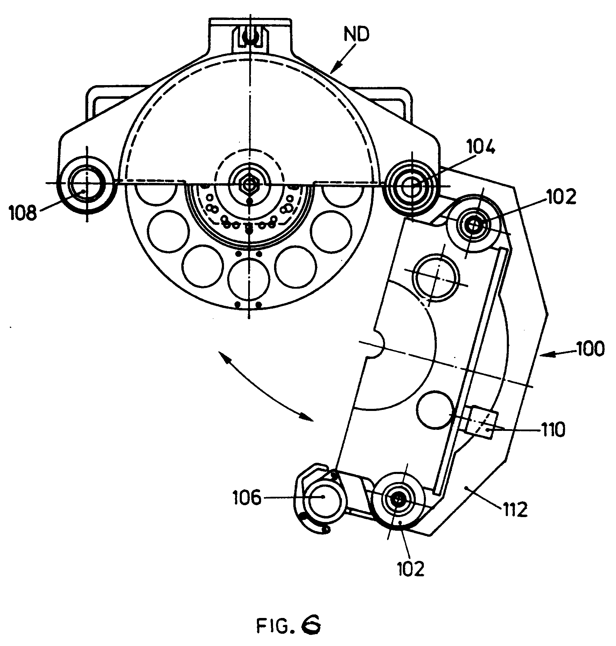

In Fig. 6 ist eine Aufsicht auf die Maschine dargestellt, wobei, aus Uebersichtsgründen, alle obengelegenen Aggregate entfernt sind.

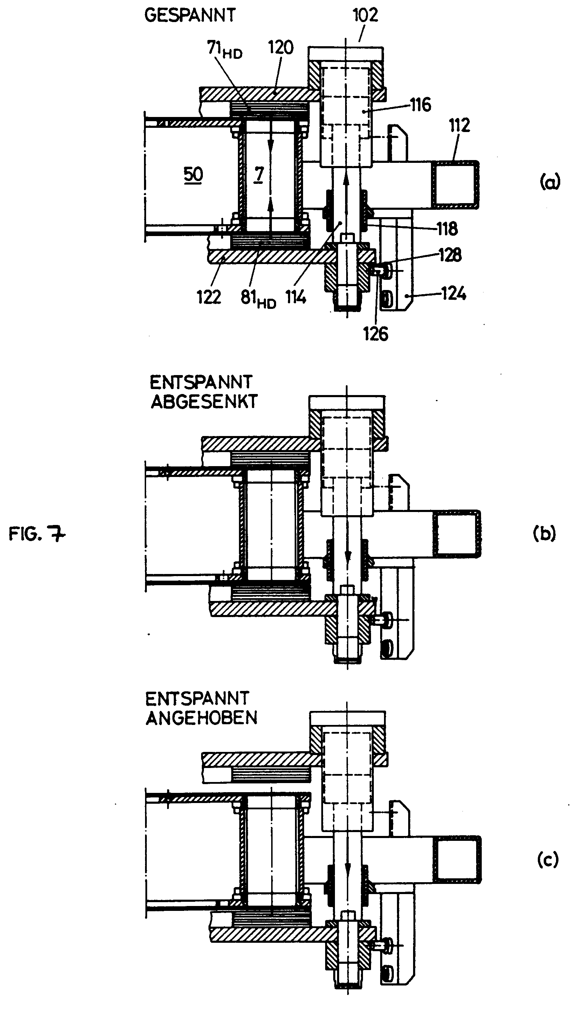

Die obere und die untere Dichtungsplatte 71 bzw. 81 sind, wie mit T in den Fig. 7 und 9 dargestellt, in je die beiden Segmente 71_{HD}, 71_{ND}; 81_{HD}, 81_{ND} getrennt. Wie noch zu beschreiben sein wird, sind die beiden Hochdrucksegmente 71_{HD} und 81_{HD} mit noch zu beschreibenden Spannkolben 102 um ein in der Trennebene entsprechend T vorgesehenes vertikales Schwenklager 104 ausschwenkbar; dem Schwenklager 104 gegenüberliegend ist eine Verschlusspartie 106 vorgesehen, mit welcher die Spannvorrichtung 100, in eingeklappter Position, durch Eingriff auf eine niederdruckseitige Verschlussanordnung 108 verriegelt werden kann.

Die Spannkolbenanordnungen 102 mit weiteren mit der Spannanordnung 100 ausschwenkbaren Organen, wie Filterstufe für die Druckausgleichsöffnung 77, Anschluss 110 für die Druckluft an Leitung 4 von Fig. 1 etc., sind an einem Trägerrahmen 112 montiert.

In Fig. 7(a) bis 7(c) ist eine der beiden gleich ausgebildeten Spannkolbenanordnungen 102 in gespannter Position (a), in entspannter und nach unten abgesenkter Position (b) und in entspannter, nach oben und unten abgehobener Position (c) dargestellt. Die Bedeutung dieser Positionen wird erläutert werden.

Gemäss Fig. 7(a), welche im Detail erläutert werden soll, um dann anhand der Fig. 7(b) und (c) die Kinetik der beiden Spannkolbenanordnungen 102 gemäss Fig. 6 zu erläutern, ist die Kolbenstange 114 einer Zylinder/Kolbenanordnung 116 in einer Gleitbüchse 118 axial frei beweglich gelagert. Der Zylinder der Kolben/Zylinderanordnung 116 trägt, über eine Montageplatte 120, welche gemäss Fig. 6 beide Spannkolbenanordnungen 102 trägt, das hochdruckseitige Segment 71_{HD} der Platte 71.

Die Kolbenstange 114 ihrerseits trägt, wiederum über eine Trägerplatte 122, welche gemeinsam für beide Spannkolbenanordnungen 102 vorgesehen ist, das Hochdrucksegment 81_{HD} der unteren Platte 81.

Durch Zusammenzug der hydraulischen Kolben/Zylinderanordnung 116 werden symmetrisch die beiden Hochdrucksegmente 71_{HD} und 81_{HD}, je an zwei Bereichen, gemäss Fig. 6 durch die beiden Spannkolbenanordnungen 102 gleichermassen an die Rotorstufe 50 bzw. deren Büchsen 7 gepresst.

Mittels eines Stellschiebers 124 ist bezüglich des Rahmens 112 ein unterer Anschlagnocken 126 für die Kolbenstange 114 der Kolben/Zylinderanordnung 116 positionierbar und liegt in gespannter Position der Spannkolbenanordnung 102 gemäss Fig. 7(a), in axialer Richtung betrachtet, beabstandet und unterhalb einer Anschlagfläche 128 an der Kolbenstange 114.

Wird nun die Kolben/Zylinderanordnung 116 entspannt, so wird, gemäss Fig. 7(b), vorerst die Kolbenstange 114 auf den Anschlagnocken 126 bewegt; Zylinder mit den Platten 120 und 71_{HD} bleiben, Schwerkraft-nach-unten-getrieben, stationär. Dadurch wird das untere Dichtplattensegment 81_{HD}, wie in Fig. 7(b) dargestellt, nach unten abgesenkt.

Durch Weiterausfahren der Kolben/Zylinderanordnung 116 wird nun, bei auf Anschlag gefahrener Kolbenstange 114, der Zylinder hochgehoben, gemäss Fig. 7(c), wodurch die Montageplatte 120 gemeinsam mit dem Hochdrucksegment 71_{HD} der oberen Druckplatte 71 angehoben wird.

Wie anhand des noch zu erläuternden Hydraulikschemas gezeigt werden wird, werden die beiden Spannkolbenanordnungen 102 je mit ihren Kolben/Zylinderanordnungen 116 synchron bewegt, so dass auf einfache Art und Weise einerseits die erforderliche Dichtungsspannung gemäss Fig. 7(a) an die Rotorstufe 50 erreicht wird, anderseits voll entspannte Position gemäss Fig. 7(c), in welcher, gemäss Fig. 6, die ganze geräteseitige Hochdruckpartie der Spannvorrichtung 100 ausgeklappt werden kann.

Durch Vorgabe des Druckes auf die Spannkolbenanordnungen 102 gemäss Fig. 7(a) kann der notwendige Dichtungsdruck, unabhängig von den Dichtungsverhältnissen an der niederdruckseitigen Partie ND gemäss Fig. 6, optimiert werden, derart, dass nur an den HD-Segmenten hohe Flächenpressungen realisiert werden, wo sie, eben hochdruckseitig, auch notwendig sind. Niederdruckseitig bleiben die Dichtungsverhältnisse davon unbeeinflusst, entsprechend einer wesentlich geringeren notwendigen Flächenpressung. Dies erlaubt, die Leistung des Rotorantriebsmotors um mehr als die Hälfte zu reduzieren. Wird beispielsweise eine hochdruck- wie auch niederdruckseitig gleiche dichtende Flächenpressung zwischen den Platten 81, 71 und Rotorstufe 50 realisiert und ergibt sich, im wesentlichen dadurch, eine notwendige Antriebsleistung von 41kW, so kann durch erfindungsgemässe Zweiteilung in Niederdruckseite und Hochdruckseite an der erfindungsgemässen Maschine die notwendige Motorenleistung auf ca. 19kW reduziert werden.

### Hydraulikschema für die Spannkolbenanordnungen 102

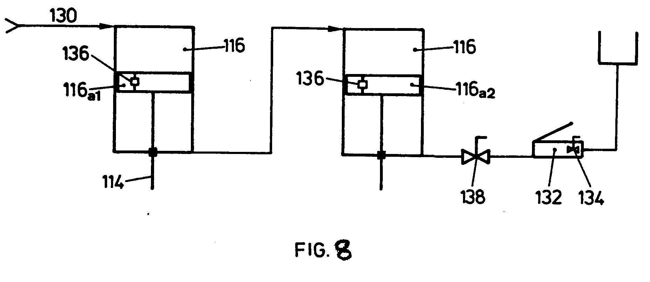

In Fig. 8 ist schematisch das Hydraulikschema für die Zylinder/Kolbenanordnungen 116 der Spannkolbenanordnungen 102 gemäss Fig. 7 dargestellt. Die beiden Zylinder der Anordnungen 116 sind seriegeschaltet, wobei das Volumen unterhalb des Kolbens 116ₐ₁, unter Mitberücksichtigung des durch die Kolbenstange 114 aufgespannten Volumens, gleich gross ist wie das Volumen oberhalb des Kolbens 116ₐ₂. Ueber Leitung 130 wird Anlagedruck, beispielsweise 18bar, angelegt. Zum Spannen der Spannkolbenanordnungen wird mittels einer Handpumpe 132 ein hoher Druck aufgebaut, womit beide Kolben 116ₐ in den Zylindern spannend (Fig. 1) hochgetrieben werden. Die erwähnten gleichen Volumina sichern dabei, dass beide Kolben 116ₐ den gleichen Spannhub zurücklegen.

Zum Entspannen der Spannkolbenanordnungen 102 wird der durch die Handpumpe 132 aufgebaute hohe Druck, beispielsweise mittels eines manuell betätigbaren Ventils 134, entspannt, so dass die beiden Kolben 116ₐ aufgrund des Anlagedruckes in Leitung 130 nach unten laufen und, gemäss Fig. 7, die Rotorstufe freigeben.

In den Kolben 116ₐ sind je mechanisch betätigte Rückschlagventile 136 bekannter Art eingebaut. Erreicht beispielsweise Kolben 116ₐ₁ aufgrund beispielsweise von Leckverlusten die untere Fläche seines zugeordneten Zylinders, bevor Kolben 116ₐ₂ die entsprechende erreicht, so wird, mechanisch, das Ventil 136 am Kolben 116ₐ₁ geöffnet, so dass, durch den Anlagedruck betrieben, Kolben 116ₐ₂ ebenfalls in die Anschlagposition getrieben wird. Damit wird Bewegungsgleichlauf der Kolben 116ₐ nötigenfalls immer wieder erstellt.

Zwischen Handpumpe 132 und dem diesbezüglichen Anschluss an die eine der Kolben/Zylinderanordnungen 116 ist vorzugsweise ein manuell betätigbares Kugelventil 138 vorgesehen.

## Patentansprüche

1. Dichtplatte für die Dichtung einer Rotorstufe (50) an einer Spritzmaschine bezüglich des Maschinen-Stators, wobei an der Peripherie der Rotorstufe (50) beidseits offene Büchsen mit einer axialen Ausrichtungskomponente angeordnet sind, sowie, Maschinen-Stator-seitig, eine Einfüllöffnung (6) von einer Füllanordnung (20), eine Druckluft-Anschlussöffnung (5), eine in Büchsenanordnungsrichtung der Druckluft-Anschlussöffnung (5) gegenüberliegende Ausspritzöffnung (3), wobei alle erwähnten statorseitigen Oeffnungen so angeordnet sind, dass bei Drehen der Rotorstufe (50) deren Büchsenöffnungen über die genannten Oeffnungen streichen und wobei die Dichtplatte mindestens eine Oeffnung (5, 6, 3) aufweist und eine elastische Platte, weiter, auf der einen Seite an der elastischen Platte, eine Metalldeckplatte (73) und, im Bereich der Peripherie der mindestens einen Oeffnung (5, 3), ein metallisches Abstreifelement (76), das an mindestens der anderen Seite der elastischen Platte freiliegt und in Richtung der Dickenausdehnung der Platte federnd gelagert ist, dadurch gekennzeichnet, dass das Abstreifelement 76) an mindestens einer in die elastische Platte einragenden Federstegpartie (75) der Metallplatte (73) angeordnet ist.

2. Dichtplatte nach Anspruch 1, dadurch gekennzeichnet, dass sie kreisring-segmentförmig ausgebildet ist.

3. Dichtplatte nach einem der Ansprüche 1 oder 2, dadurch gekennzeichnet, dass die Einfüllöffnung (6) sich kreissektorartig entlang der Dichtplatte erstreckt und das Abstreifelement im Bereich eines der Enden der Oeffnung angeordnet ist.

4. Dichtplatte nach einem der Ansprüche 1 bis 3, dadurch gekennzeichnet, dass die Druckluft-Anschlussöffnung (5) in der Platte im wesentlichen kreisförmig ist und ein die Druckluft-Anschlussöffnung (5) düsenartig verengernder, zweiseitig gelagerter Steg (72) durch die Oeffnung ragt.

5. Dichtplatte nach Anspruch 4, dadurch gekennzeichnet, dass eine weitere Oeffnung (77) an der Platte vorgesehen ist, und zwar in derjenigen Richtung an die Druckluftanschlussöffnung (5) anschliessend, in der, an letzterer, das Abstreifelement (76) vorgesehen ist.

6. Dichtplatte nach einem der Ansprüche 1 bis 5, gebildet durch zwei sich zu einem Kreisring ergänzende Plattenteile, vorzugsweise je halbkreisförmige Plattenteile.

7. Dichtplatte nach einem der Ansprüche 1 bis 6, dadurch gekennzeichnet, dass die elastische Platte aus vulkanisiertem Gummi besteht.

## Claims

1. A sealing plate for sealing a rotor stage (50) in an injection machine, relative to the machine stator, whereby on the periphery of said rotor stage (50) there are provided sleeves that are open on both sides and disposed with an axial orientation component, and on the stator side of the machine a feed opening (6) of a filling device (20), a compressed-air supply opening (5) and a projection opening (3) opposing the latter in the sleeve arrangement direction, whereby all openings on the stator side are disposed so that upon rotation of the rotor stage (50) the latter's sleeve openings pass over said openings, and the sealing plate has at least one opening (5, 6, 3), an elastic plate, a metal covering plate (73) placed on one side of said elastic plate, and in the region of the periphery of said opening(s) (5, 3) a metal scraping element (76) that is exposed at least on the other side of the elastic plate and resiliently mounted in the direction of the thickness of the plate, characterized in that said scraping element (76) is provided on at least one spring tab part (75) of said metal plate (73), which projects into the elastic plate.

2. The sealing plate according to claim 1, characterized in that it has the shape of a circular ring segment.

3. The sealing plate according to one of claims 1 or 2, characterized in that feed opening (6) extends in the shape of a sector along said sealing plate and the scraping element is provided in the region of one end of said opening.

4. The sealing plate according to any of claims 1 to 3, characterized in that compressed-air supply opening (5) in said plate is substantially circular and a bridge (72) mounted on two sides and narrowing said compressed-air supply opening (5) like a nozzle extends across the latter.

5. The sealing plate according to claim 4, characterized in that another opening (77) is provided on said plate, namely following compressed-air supply opening (5) in the direction in which scraping element (76) is provided on said opening (5).

6. The sealing plate according to any of claims 1 to 5, defined by two preferably semicircular plate parts which complement each other to form a circular ring.

7. The sealing plate according to any of claims 1 to 6, characterized in that the elastic plate is made of vulcanized rubber.

## Revendications

1. Plaque d'étanchéité pour l'étanchéité d'un étage à rotor (50), sur une machine de projection, par rapport au stator de la machine, étant précisé qu'on prévoit sur la périphérie de l'étage à rotor (50) des douilles ouvertes des deux côtés et présentant une composante d'orientation axiale, et, du côté du stator de la machine, une ouverture de chargement (6) d'un dispositif de remplissage (20), une ouverture d'alimentation en air comprimé (5) et une ouverture de projection (3) qui fait face à celle-ci, dans le sens du dispositif de douilles, toutes les ouvertures situées côté stator qui ont été mentionnées étant disposées de telle sorte que lors de la rotation de l'étage à rotor (50), les ouvertures de douilles de celui-ci passent sur lesdites ouvertures, et la plaque d'étanchéité comportant au moins une ouverture (5, 6, 3), une plaque élastique et, sur un côté de celle-ci, une plaque de recouvrement métallique (73), et enfin, dans la zone de la périphérie de l'ouverture ou des ouvertures (5, 3), un élément racleur métallique (76) qui est découvert au moins sur l'autre côté de la plaque élastique et qui est monté à ressort dans le sens de l'épaisseur de la plaque, caractérisée en ce que l'élément racleur (76) est disposé sur au moins une partie en forme de patte à ressort (75) de la plaque métallique (73) qui pénètre dans la plaque élastique.

2. Plaque d'étanchéité selon la revendication 1, caractérisée en ce qu'elle a la forme d'un segment de couronne circulaire.

3. Plaque d'étanchéité selon la revendication 1 ou 2, caractérisée en ce que l'ouverture de chargement (6) s'étend en forme de secteur de cercle le long de la plaque d'étanchéité, et l'élément racleur est disposé dans la zone de l'une des extrémités de l'ouverture.

4. Plaque d'étanchéité selon l'une des revendications 1 à 3, caractérisée en ce que l'ouverture d'alimentation en air comprimé (5) prévue dans la plaque est globalement circulaire, et un pont (72) monté sur deux côtés et rétrécissant l'ouverture d'alimentation en air comprimé (5) à la manière d'un ajutage traverse ladite ouverture.

5. Plaque d'étanchéité selon la revendication 4, caractérisée en ce qu'il est prévu sur la plaque une autre ouverture (77), qui fait suite à l'ouverture d'alimentation en air comprimé (5) dans le sens dans lequel l'élément racleur (76) est prévu sur celle-ci.

6. Plaque d'étanchéité selon l'une des revendications 1 à 5, formée par deux parties de plaque, de préférence semi-circulaires, qui se complètent pour former une couronne circulaire.

7. Plaque d'étanchéité selon l'une des revendications 1 à 6, caractérisée en ce que la plaque élastique est en caoutchouc vulcanisé.
